# EUROPEAN PATENT APPLICATION

(11) **EP 1 821 534 A2**
(43) Date of publication of application: **22.08.2007**
(21) Application number: 06018007.2
(22) Date of filing: 29.08.2006
(51) Int. Cl.: H04N 5/74

(54) **Projection type image display device and brightness control method thereof**

(30) Priority: 17.02.2006 KR 20060015883
(71) Applicant: LG Electronics Inc., Yongdungpo-Gu Seoul 150-010 (KR)
(72) Inventor: Ahn, Sang Jin, Goomi-si, Gyeongsangbook-do (KR)
(74) Representative: Katérle, Axel

(57) **Abstract**

A projection type image display device and a brightness control method are provided. The projection type image display device may include a projection lens to project light onto a screen, a light amount regulator to control the amount of light projected through the projection lens, and a light amount controller to control the light amount regulator according to an inputted image signal.

## Description

The present application claims priority from Korean Application No. 15883/2006, filed February 17, 2006, the subject matter of which is incorporated herein by reference.

### BACKGROUND

### 1. Field

Embodiments of the present invention may relate to a projection type image display device.

### 2. Background

A projection type image display device may include a projection television (TV) and a projector. The projection type image display device may also include an image projecting device (or unit) called an optical engine. Such an optical engine may include an illumination system in which light is emitted, a combination system in which an image is created by a combination of an image signal and light emitted from the illumination system, and a projection system in which the image created at the combination system is projected.

The optical engine may be categorized as a liquid crystal display (LCD) projection type or a digital light processing (DLP) projection type based on how images are created in the combination system.

The projection type image display device may use a lamp as a light source. However, such an image display device may be problematic in that an image may not be displayed with an adequate black level and contrast ratio because of leakage light emitted from the lamp. Also, the optical engine of the projection type image display device may not effectively express the brightness level of an image with the light of the lamp.

### BRIEF DESCRIPTION OF THE DRAWINGS

The accompanying drawings are included to provide a further understanding of arrangements and embodiments of the present invention and are incorporated in and constitute a part of this application. In the following drawings, like reference numerals refer to like elements and wherein:

FIGs. 1 and 2 are views illustrating a configuration of an optical engine in a projection type image display device employing a digital light processing (DLP) technology according to an example embodiment of the present invention;

FIGs. 3 and 4 are views illustrating a configuration of an optical engine of a projection type image display device employing a Liquid Crystal on Silicon (LCoS) panel according to an example embodiment of the present invention;

FIG. 5 is a view illustrating a configuration of a light amount regulator according to an example embodiment of the present invention;

FIG. 6 is a view illustrating that a light amount regulator is not operated;

FIG. 7 is a view illustrating that a bright image is displayed because 100% of light is transmitted;

FIG. 8 is a view illustrating that an operation of a light amount regulator is maximized;

FIG. 9 is a view illustrating that a dark image is displayed because a minimum amount of light is transmitted;

FIG. 10 is a view of a light amount regulator according to an example embodiment of the present invention; and

FIG. 11 is a flowchart illustrating a brightness control method of an image display device according to an example embodiment of the present invention.

### DETAILED DESCRIPTION

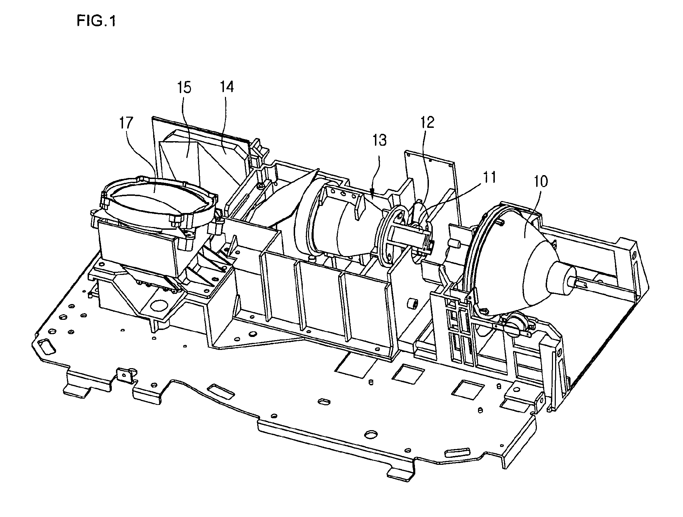

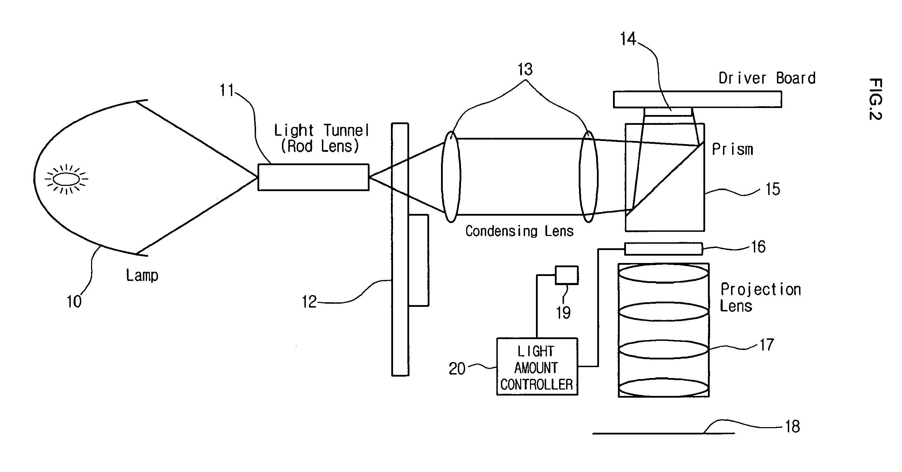

FIGs. 1 and 2 are views illustrating a configuration of an optical engine in a projection type image display device employing a DLP technology according to an example embodiment of the present invention. Other embodiments and configurations are also within the scope of the present invention.

More specifically, FIGs. 1 and 2 show an optical engine that includes a lamp 10 to emit (or provide light), a light tunnel 11 through which the light from the lamp 10 passes, and a color wheel 12 to split a white light passing through the light tunnel 11 into red (R), green (G) and blue (B) components. The optical engine may further include a condensing lens 13 (or lenses) to condense the light passing through the color wheel 12, a prism 15 to reflect the light passing through the condensing lens 13, and a digital micromirror device (DMD) 14 to create an image using the light reflected from the prism 15. Additionally, the optical engine may further include a projection lens 17 to enlarge the image reflected thereonto from the DMD 14 and to project the enlarged image onto a screen 18. While FIGs. 1-2 only discuss a condensing lens and a projection lens, more than one condensing lens and/or projection lens may also be provided.

A light amount regulator 16 (or light amount actuator), an optical sensor 19, and a light amount controller 20 (or light amount regulator) are provided between the DMD 14 and the projection lens 17. The light amount regulator 16 controls (or modulates) an amount of light projected through the projection lens 17. The optical sensor 19 detects the amount of light that is incident upon the projection lens 17 after the light has been reflected from the DMD 14.

The light amount controller 20 drives the light amount regulator 16 according to an average brightness of an inputted image, thereby making a dark image darker and a bright image brighter.

The light amount controller 20 controls the light amount regulator 16 based on the brightness of light detected by the optical sensor 19.

The optical sensor 19 may be formed (or provided) at any portion of an optical path (or along an optical path) to measure the brightness of light emitted from the lamp 10. When the brightness of light decreases, the light amount controller 20 controls the light amount regulator 16 based on the brightness of light detected by the optical sensor 19 so that a greater amount of light can be projected. For example, the brightness of light may decrease due to performance deterioration and breakdown of the lamp.

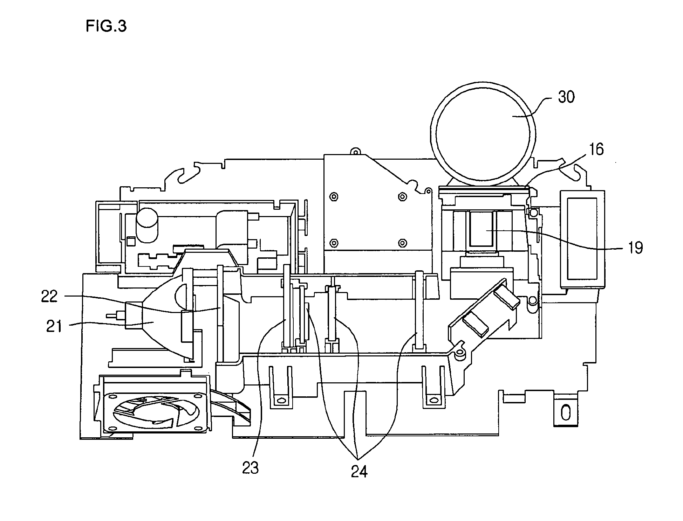

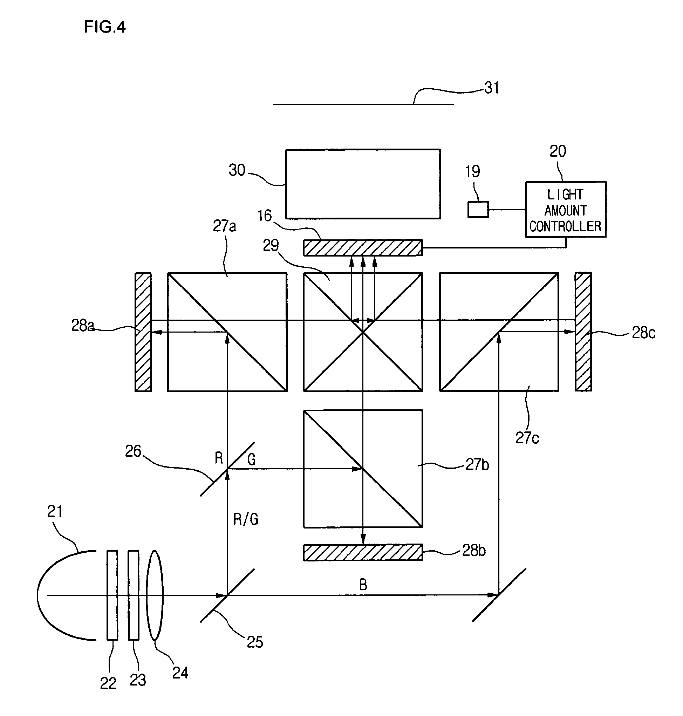

FIGs. 3 and 4 are views illustrating a configuration of an optical engine of a projection type image display device employing an LCoS panel according to an example embodiment of the present invention. Other configurations and embodiments are also within the scope of the present invention.

More specifically, FIGs. 3 and 4 show an optical engine that includes a lamp 21 to emit (or provide) light, a first optical unit 22, a second optical unit 23, and a condensing lens 24 (or lenses). As one example, the first optical unit 22 may be a fly-eye lens (FEL) and the second optical unit 23 may be a polarization beam splitter (PBS) array. The first optical unit 22 and the second optical unit 23 may make the emitted light uniform.

Light passing through the condensing lens 24 may be incident upon a first dichroic mirror 25. Red (R) and green (G) components of the light may be reflected from the first dichroic mirror 25 and a blue (B) component of the light may be transmitted therethrough.

The reflected R and G light components may be incident upon a second dichroic mirror 26. The G component may reflected from the second dichroic mirror 26 and the R component may be transmitted therethrough. Accordingly, the R, G and B components may be incident upon first, second and third polarized beam splitters (PBSs) 27a, 27b and 27c, which are provided in front of first, second and third LCoS panels 28a, 28b and 28c, respectively.

The R, G and B components incident upon the first, second and third PBSs 27a, 27b and 27c are reflected therefrom and are incident on the first, second and third LCoS panels 28a, 28b and 28c, respectively. The incident R, G and B components undergo phase changes by the first, second and third LCoS panels 28a, 28b and 28c and are reflected from the first, second and third LCoS panels 28a, 28b and 28c, respectively. The reflected R, G and B components are transmitted through the first, second and third PBSs 27a, 27b and 27c, respectively.

An image may be created at the first, second and third LCoS panels 28a, 28b and 28c based on the inputted image signals. The image of the R, G and B components of light having been transmitted through the first, second and third PBSs 27a, 27b and 27c from the first, second and third LCoS panels 28a, 28b and 28c may be combined in an X-prism 29. The combined signals may pass through the light amount regulator 16, and may be incident upon the projection lens 30. An image may be projected onto the screen 31 through the projection lens 30.

The light amount regulator 16 may be provided between the X-prism 29 and the projection lens 30. The light amount controller 20 may drive the light amount regulator 16 based on an average brightness of the inputted image, thereby making a dark image darker and a bright image brighter.

The light amount controller 20 may control the light amount regulator 16 based on the brightness of light detected by the optical sensor 19.

The optical sensor 19 may be placed (or provided) at any position of an optical path (or along the optical path) to measure the brightness of light from the lamp 21. When the brightness of light decreases, the light amount controller 20 may control the light amount regulator 16 based on the brightness of light detected by the optical sensor 19, thereby allowing projection of a greater amount of light. For example, the brightness of light may decrease due to the performance deterioration and breakdown of the lamp 21.

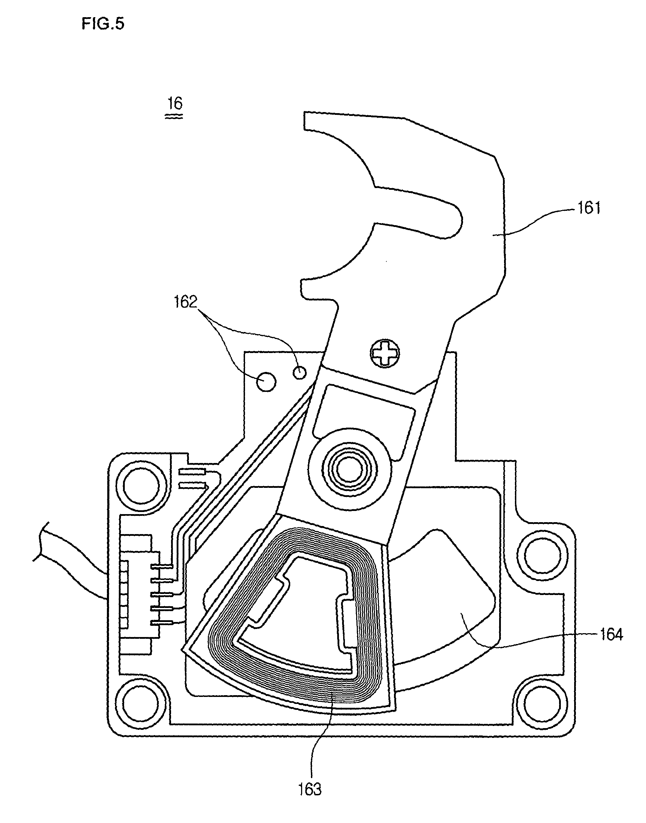

FIG. 5 is a view illustrating a configuration of the light amount regulator according to an example embodiment of the present invention. Other embodiments and configurations are also within the scope of the present invention.

The light amount regulator 16 may include an aperture device 161 having an aperture to control (i.e., modulate and/or regulate) an amount of light passing therethrough based on an adjustment extent thereof. The light amount regulator 16 may also include a hole sensor 162 controlling opening of the aperture device 161 based on a control signal from the light amount controller 20. The light amount regulator 16 may also include a pivot coil 163 and a magnet 164 to generate a driving force of the aperture device 161.

When the light amount regulator 16 is not operated, 100% of light (or a substantially large percentage of light) may be transmitted because the aperture device 161 does not block the light. In contrast, when operation of the light amount regulator 16 is maximized, the aperture device 161 may block the light, thereby allowing a low light transmission, such as approximately 13.2% of a total amount of light. Other percentages are also within the scope of the present invention.

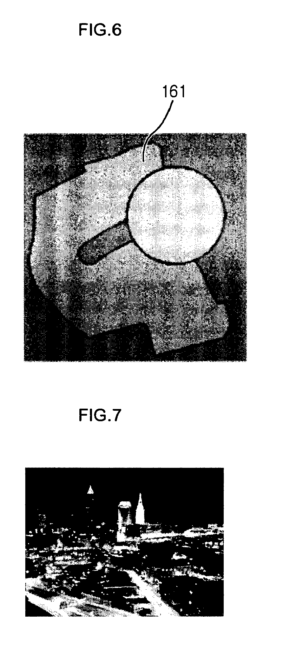

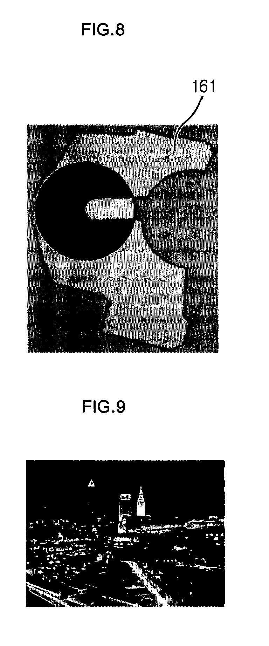

FIG. 6 is a view illustrating that a light amount regulator is not operated. FIG. 7 is a view illustrating that a bright image is displayed because 100% of light is transmitted. FIG. 8 is a view illustrating an operation of a light amount regulator is maximized (or almost maximized). FIG. 9 is a view illustrating that a dark image is displayed because a minimum amount of light is transmitted.

As illustrated in FIGs. 7 and 9, operation of the light regulator 16 controls the brightness of light and may not cause a defective display of an image.

The light amount regulator 16 may control the amount of light by opening or closing the aperture device 161 upon the optical engine recognizing the brightness of an image based on the average brightness of an input image. In the examples shown in FIGs. 7 and 9, the aperture device 161 is adjusted from 0 degrees to 15 degrees. Other degrees of adjustment are also within the scope of the present invention.

When a bright image is input, the aperture device 161 may be opened to an adequate amount to increase the brightness of light. When a dark image is input, the aperture device 161 may be closed to an adequate amount to decrease the brightness of light. By operating as such, the screen black level and contrast ratio may be improved.

In an example embodiment of the present invention, in order to minimize (or to decrease) dimensional variations of optical components forming the optical engine, the optical sensor 19 placed (or provided) on an optical path (or along the optical path) may detect a decrease in the amount of light from the lamp and the amount of light may be controlled according to states of the optical components as well as the brightness of the inputted image.

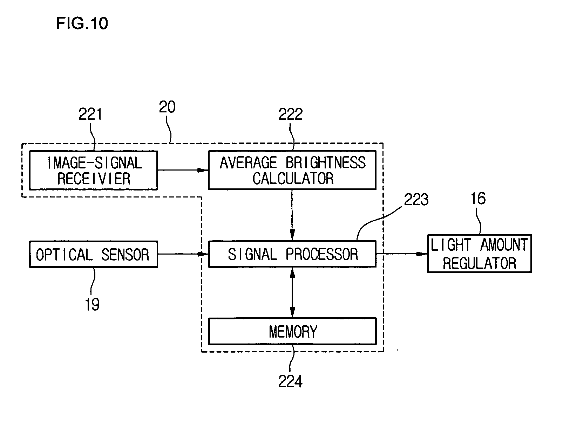

FIG. 10 is a view illustrating a light amount controller according to an example embodiment of the present invention. Other embodiments and configurations are also within the scope of the present invention.

A brightness control device of an image display device may include the optical sensor 19, the light amount controller 20 and the light amount regulator 16. The optical sensor 19 may detect changes in lamp brightness and optical-path brightness. The light amount controller 20 may output a control signal based on the brightness of input image signals and a detection value received from the optical sensor 19. The light amount regulator 16 may control the amount of light projected through the projection lens based on the control signal of the light amount controller 20.

As shown in FIG. 10, the light amount controller 20 may include an image signal receiver 221 to receive an image signal, an average brightness calculator 222 to calculate the average brightness of the image signal inputted through the image signal receiver 221, a memory 224 to store control values for controlling the light amount regulator 16 according to the amount of light detected by the optical sensor 19, and a signal processor 223 to output a control signal based on a control value stored in the memory 224, the brightness calculated by the average brightness calculator 222 and the amount of light detected by the optical sensor 19. While FIG. 10 shows the average brightness calculator 222 to calculate the average brightness, embodiments of the present invention may also calculate other levels of brightness.

Operations of a projection type image display device according to an example embodiment of the present invention configured in such a manner will now be described.

The average brightness calculator 222 may calculate the average brightness of each frame of an image inputted through the image signal receiver 221 and transmit the calculated value to the signal processor 223.

The signal processor 223 receives the calculated average brightness and controls opening and closing of the aperture device 161 based on the brightness of the image. At the same time (or substantially the same time), the signal processor 223 controls the light amount regulator 16 by receiving the amount of light detected by the optical sensor 19 and extracting a control value from a Look Up Table stored in the memory 224.

The Look Up Table (LUT) pre-stored in the memory 224 may be as in the following Table 1.

| Optical Engine | Pulse Width Modulated (PWM) signal | Adjustment Angle of Aperture Device | Transmittance |
|---|---|---|---|
| 750~800cd/m2 | 230 | 1.77~16.77° | 3%~89.8% |
| 700~750cd/m2 | 220 | 1.18~16.18° | 6.4%~93.2% |
| 650~700cd/m2 | 210 | 0.59~15.59° | 9.8%~96.6% |
| 600~650cd/m2 | 200 | 0~15° | 13.2%~100% |
| 550~600cd/m2 | 190 | -0.59~14.41° | 16.6%~100% |
| 500~550cd/m2 | 180 | -1.18~13.82° | 20%~100% |
| 450~500cd/m2 | 170 | -1.77~13.23° | 23.4%~100% |
| 400~450cd/m2 | 160 | -2.36~12.64° | 26.8%~100% |
| 350~400cd/m2 | 150 | -2.95~12.05° | 30.2%~100% |
| 300∼350cd/m2 | 140 | -3.54~11.46° | 33.6%~100% |
| 250~300cd/m2 | 130 | -4.13~10.87° | 37%~100% |

Accordingly, to drive the light amount regulator 16, the light amount controller 20 detects a brightness change of the optical engine (i.e., light on the optical path) over time and due to dimensional variations of optical components using the optical sensor 19. Then, the light amount controller 20 matches the detection result with control conditions such as those shown in the Table 1, thereby driving the light amount regulator 16.

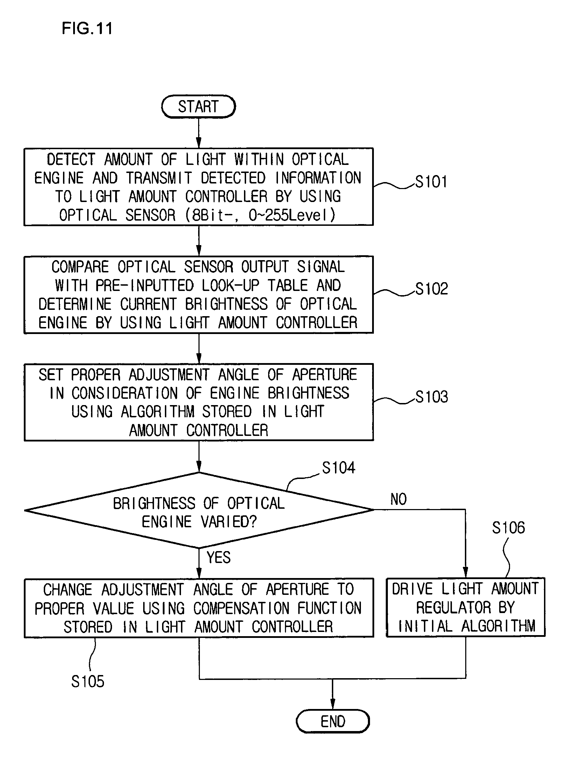

FIG. 11 is a flowchart illustrating a brightness control method of an image display device according to an example embodiment of the present invention. Other operations, orders of operations and embodiments are also within the scope of the present invention.

In operation S101, an amount of light within an optical engine is detected through an optical sensor, and information on the detected amount of light is transmitted to a light amount controller.

In operation S102, the transmitted detected value is matched with a control value stored in a memory in order to determine the current brightness of the optical engine.

In operation S103, an adjustment angle of an aperture of a light amount regulator is set based on the brightness of the optical engine.

In operation S104, a determination is made whether the brightness of the optical engine varies.

Then, in operation S105, when the determination result in the operation S104 shows that the brightness of the optical engine varies (or varies above a predetermined amount) an aperture angle of the light amount regulator is changed based on a value stored in the memory.

In operation S106, when the determination in the operation S104 shows that the brightness of the optical engine does not vary (or does not vary above a predetermined amount), the amount of light is controlled to a previously set value (or initial value).

A projection type image display device provided with an optical engine and a brightness control method thereof according to an example embodiment of the present invention may allow selective adjustment of an amount of light projected onto a screen by detecting a brightness of an inputted image signal and detecting the brightness of the optical engine.

A projection type image display device according to an example embodiment of the present invention may prevent screen brightness variations caused by brightness variation in the optical engine (i.e., a lamp).

A projection type image display device according to an example embodiment of the present invention may also prevent or decrease image deterioration due to the brightness degradation of the optical engine over time.

In addition, a projection type image display device according to an example embodiment of the present invention may provide a satisfactory image by controlling the amount of projected light based on the average brightness of an image and states of the optical engine.

Embodiments of the present invention may include a projection type image display device and an image display method thereof that substantially obviates one or more problems due to limitations and disadvantages of disadvantageous arrangements.

Embodiments of the present invention may provide a projection type image display device and an image display method capable of effectively displaying an image with an adequate black level and contrast ratio by controlling an amount of light emitted from a lamp.

Embodiments of the present invention may provide a projection type image display device and an image display method capable of effectively displaying an image by controlling an amount of light emitted from a lamp according to a brightness of an image and an actual amount of emitted light.

In an embodiment of the present invention, a projection type image display device may be provided that includes a lamp emitting light, a light tunnel through which the light from the lamp passes, and a color wheel splitting a white light passing through the light tunnel into R (red), G (green) and B (blue) components. The projection type image display device may also include a condensing lens condensing the light passing through the color wheel, and a prism reflecting the light passing through the condensing lens. Still further, the projection type image display device may include a digital micromirror device (DMD) creating an image using the light reflected from the prism, a projection lens enlarging the image reflected from the DMD and projecting the light onto a screen, and a light amount regulator provided between the DMD and the projection lens and controlling the amount of light projected through the projection lens. Additionally, a light amount controller may be provided for controlling the light amount regulator according to an inputted image signal.

In an embodiment of the present invention, a projection type image display device may be provided that includes a lamp emitting light, an optical unit making the emitted light uniform, and a plurality of dichroic mirrors splitting a white light passing through the optical unit into R, G and B components. The projection type image display device may also include a plurality of polarization beam splitters (PBSs) reflecting or transmitting the light according to phases of the incident light, and a plurality of liquid crystal on silicon (LCoS) panels creating an image using an image signal and light that is incident thereon from the PBSs. Still further, the projection type image display device may include an X-prism combining an image incident thereon from the LCoS panels, and a projection lens enlarging an image combined by the X-prism and projecting the image onto a screen. Additionally, the projection type image display device may include a light amount regulator provided between the X-prism and the projection lens to control the amount of light projected through the projection lens, and a light amount controller to control the light amount regulator according to an inputted image signal.

Embodiments of the present invention may also provide a brightness control method of an image display device that includes detecting the brightness of light emitted from a lamp through an optical sensor provided within an optical engine, and controlling the amount of light projected through a projection lens by driving a light amount regulator placed on an optical path according to the brightness of the light.

The foregoing description is exemplary and explanatory and is intended to provide an explanation of embodiments of the present invention. Advantages, objects and features of embodiments of the invention may be set forth in part in the description and in part will become apparent to those having ordinary skill in the art. Objectives and other advantages of embodiments may be realized and attained by the structure particularly pointed out in the written description and claims hereof as well as the appended drawing.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Embodiments of the present invention may have been described with reference to a number of illustrative embodiments. It should be understood that numerous other modifications and embodiments can be devised by those skilled in the art that will fall within the spirit and scope of the principles of embodiments of the present invention. More particularly, reasonable variations and modifications are possible in the component parts and/or arrangements of the subject combination arrangement within the scope of the foregoing disclosure, the drawings and the appended claims without departing from the spirit of embodiments of the present invention. In addition to variations and modifications in the component parts and/or arrangements, alternative uses will also be apparent to those skilled in the art.

## Claims

1. A projection type image display device comprising:
a projection lens to project an image onto a screen;
a light amount regulator to control an amount of light projected through the projection lens; and
a light amount controller to control the light amount regulator based on an image signal.

2. The device according to claim 1, further comprising:
a color wheel to split a light into red (R), green (G) and blue (B) components;
a condensing lens to condense the light passing through the color wheel;
a prism to reflect the light passing through the condensing lens; and
a digital micromirror device (DMD) to create an image using the light reflected from the prism.

3. The device according to claim 2, wherein the light amount regulator is provided between the DMD and the projection lens.

4. The device according to claim 2, further comprising:
an optical sensor to detect the brightness of light from a lamp,
wherein the light amount controller controls the light amount regulator based on an average brightness of the image signal and the brightness detected by the optical sensor.

5. The device according to claim 4, wherein the optical sensor is provided between the DMD and the projection lens.

6. The device according to claim 1, wherein the light amount regulator comprises:
an aperture device to block light and/or allow light to pass through; and
a control device to move the aperture device.

7. The device according to claim 1, wherein the light amount controller controls the light amount regulator based on an average brightness of the image signal.

8. The device according to claim 1, wherein the light amount controller comprises:
an image signal receiver to receive the image signal;
a calculator to calculate an average brightness of the image signal; and
a processor to calculate a control value based on the average brightness of the image signal.

9. The device according to claim 8, wherein the average brightness of the image signal is the average brightness of each frame of the image signal.

10. The device according to claim 1, further comprising:
a plurality of dichroic mirrors to split light into red (R), green (G) and blue (B) components;
a plurality of polarization beam splitters (PBSs) to reflect or transmit the light components based on phases of the light;
a plurality of liquid crystal on silicon (LCoS) panels to create an image based on light that is incident thereon from the PBSs; and
a prism to combine an image incident thereon from the LCoS panels.

11. The device according to claim 10, wherein the light amount regulator is provided between the prism and the projection lens.

12. The device according to claim 10, further comprising:
an optical sensor to detect the brightness of light from a lamp,
wherein the light amount controller controls the light amount regulator based on an average brightness of the image signal and the brightness detected by the optical sensor.

13. The device according to claim 12, wherein the optical sensor is provided between the prism and the projection lens.

14. The device according to claim 10, wherein the light amount regulator comprises:
an aperture device to block light and/or allow light to pass through; and
a control device to move the aperture device.

15. The device according to claim 10, wherein the light amount controller controls the light amount regulator based on an average brightness of the image signal.

16. The device according to claim 10, wherein the light amount controller comprises:
an image signal receiver to receive the image signal;
an average brightness calculator to calculate an average brightness of the image signal; and
a processor to calculate a control value based on the average brightness of the image signal.

17. The device according to claim 16, wherein the average brightness of the image signal is the average brightness of each frame of the image signal.

18. A brightness control method of an image display device, the method comprising:
detecting a brightness of light from a lamp of an optical engine; and
controlling an amount of light projected through a projection lens based on the detected brightness of the light.

19. The method according to claim 18, wherein controlling the amount of light includes driving a light amount regulator.

20. The method according to claim 19, wherein driving the light amount regulator comprises:
extracting a control value from a memory based on the amount of detected light; and
controlling the light amount regulator based on the extracted control value.

21. The method according to claim 20, wherein driving the light amount regulator further comprises:
determining whether the detected brightness varies after the controlling the light amount regulator; and
changing a control value for the light amount regulator when the detected brightness varies.

22. The method according to claim 18, further comprising receiving an image signal, and controlling the amount of light projected through the projection lens by driving the light amount regulator based on a brightness of the image signal.

23. The method according to claim 22, wherein the brightness of the image signal comprises an average brightness of each image frame.

24. A projection image display device comprising:
a sensor to sense light;
a light regulator to regulate an amount of light that passes through a projection lens onto a screen; and
a light controller to control the light regulator based on the light sensed by the sensor.

25. The projection image display device according to claim 24, further comprising:
a prism to reflect light;
a digital micromirror device (DMD) to create an image based on the light reflected by the prism.

26. The projection image display device according to claim 25, wherein the light regulator is provided between the DMD and the projection lens.

27. The projection image display device according to claim 24, further comprising:
a plurality of dichroic mirrors to split a light into red (R), green (G) and blue (B) components;
a plurality of polarization beam splitters (PBSs) to reflect or transmit the light components based on phases of the light;
a plurality of liquid crystal on silicon (LCoS) panels to create an image based on light that is incident thereon from the PBSs; and
a prism to combine an image incident thereon from the LCoS panels.

28. The projection image display device according to claim 27, wherein the light amount regulator is provided between the prism and the projection lens.

29. The projection image display device according to claim 25, wherein the light amount controller controls the light amount regulator based on an average brightness of an image signal and the sensed light.

30. The projection image display device according to claim 24, wherein the light amount controller comprises:
an image signal receiver to receive an image signal;
a calculator to calculate an average brightness of the image signal; and
a processor to calculate a control value based on the average brightness of the image signal.
